# EUROPÄISCHE PATENTSCHRIFT

(11) **EP 2 532 698 B1**
(45) Veröffentlichungstag und Bekanntmachung des Hinweises auf die Patenterteilung: **20.04.2016**
(21) Anmeldenummer: 11004672.9
(22) Anmeldetag: 08.06.2011
(51) Int. Cl.: C08G 69/16

(54) **Verfahren und Vorrichtung zur direkten, kontinuierlichen Modifizierung von Polymerschmelzen**
Method and device for direct, continuous modification of polymer melts
Procédé et dispositif de modification directe et continue de masses fondues polymères

(43) Veröffentlichungstag der Anmeldung: 12.12.2012
(73) Patentinhaber: Uhde Inventa-Fischer GmbH, 13509 Berlin (DE)
(72) Erfinder: Siebecke, Ekkehard, 10825 Berlin (DE); Bär, Mirko, 16547 Birkenwerder (DE); Raue, Eberhard, 16567 Schönfließ (DE)
(74) Vertreter: Pfenning, Meinig & Partner mbB

(56) Entgegenhaltungen:
- EP-A1- 0 000 397
- EP-A1- 0 745 631
- DE-A1-102007 057 189
- DE-A1-102008 044 452
- US-A- 5 458 478
- US-B1- 6 320 021
- US-B1- 6 326 457

## Beschreibung

Die Erfindung betrifft ein Verfahren zur direkten, kontinuierlichen Modifizierung von Polymerschmelzen mit Additiven im Seitenstrom und zeichnet sich durch einen sehr hohen Flexibilitätsgrad bei Produktumstellungen aus.

Aus unterschiedlichen Gründen müssen Polymerschmelzen mit Additiven modifiziert werden. Ein Grund ist, dass Polymerschmelzen mehr oder weniger transparent sind, weil der homogene Aufbau der synthetischen Polymeren dem Licht keine Möglichkeit zur Brechung oder Reflexion bietet. Für die verschiedensten Anwendungen werden Polymerschmelzen daher mit Pigmenten, wie z.B. TiO₂, ZnS oder Ruß versetzt. Speziell im Kunstfaserbereich ist es erwünscht, der Schmelze vor dem Verspinnen den unschönen und speckigen Glanz zu nehmen, der besonders bei der Verwendung von Kunstfasern im Bekleidungsbereich störend wirkt. Die Brechung des Glanzes erfolgt durch Zugabe einer verhältnismäßig geringen Menge eines Weißpigments, in der Regel Titandioxid. Aber auch für weitere Zwecke, wie z.B. zur Herstellung von Antipilling-Fasern oder zur optischen Aufhellung von z.B. gelbstichigen Polymeren, ist die Modifikation von Polymerschmelzen durch Additivzugabe bekannt.

Stand der Technik sind Schmelzemodifizierungsverfahren unter Einsatz von Masterbatchschmelzen. Dieses Prinzip wird z.B. in der DE-OS 16 04 368 beschrieben. Eine an Additiv hochprozentige Schmelze aus Masterbatchgranulat wird in einem definierten Verhältnis der zu modifizierenden Polymerschmelze stromabwärts zugemischt. Dieses Verfahren bietet bei Qualitätsumstellungen zwar eine hohe Flexibilität, hat aber folgende Nachteile: Erstens muss das Masterbatchgranulat vor dem Aufschmelzen getrocknet werden.

Zweitens erfährt es beim Wiederaufschmelzen eine zusätzliche thermische und mechanische Belastung. Dritter Nachteil dieses Verfahrens sind die zusätzlichen Handling-Kosten. Ein anderer Nachteil ist die Gefahr der externen Verschmutzung des Granulats. Bei betriebsinterner Masterbatchherstellung kommt als weiterer Nachteil hinzu, dass Polymergranulat aus dem Produktionsprozess entnommen werden muss. Nachteil von Masterbatchfremdgranulaten sind Unterschiede zwischen den verwendeten Polymeren, die die Gebrauchseigenschaften des Endproduktes nachteilig beeinflussen.

Eine Modifizierungsvariante wird in der Zeitschrift Chemical Engineering Progress 78(1982)1, S. 62-64, beschrieben. Anstelle der Additivzugabe stromabwärts in die Polymerschmelze, werden hier sowohl das Polymergranulat als auch die bevorzugt reaktionsfähigen Additive in den ersten Extruderbereich eingegeben. Nachteil dieses Verfahrens sind einerseits die Gefahr der Kompaktierung des Additivs zwischen den Granulaten und andererseits die für Homogenisierung und Dispergierung notwendigen hohen Scherspannungen, die zu einer starken und unkontrollierbaren Viskositätserniedrigung des Polymeren führen.

Ein weiteres dem Stand der Technik zugehöriges Verfahren wird in der Zeitschrift Chemiefasern und Textilindustrie 1 (1986), S. 24-29, beschrieben. Hier wird von einem aus dem Polykondensationsendreaktor austretenden Hauptschmelzestrom ein Teilstrom abgezweigt und ein Additiv in die Schmelze stromabwärts eingearbeitet. Diese mit Additiv beladene Schmelze wird wieder in den Hauptschmelzestrom zurückgeführt. Dieses Verfahren hat auch einen hohen Flexibilitätsgrad bei Additivumstellungen, aber mehrere wesentliche Nachteile. Einmal entweichen trotz Absaugung die in der Polymerschmelze enthaltenen flüchtigen Bestandteile, wie z.B. Glykol- und Wasserdämpfe oder Oligomere, bei der Additivzugabe durch den Einfülltrichter. Das führt zu einer verminderten Rieselfähigkeit des Additivs und zu Verklumpungen. Additivagglomerate lassen sich nicht mehr homogen in die Schmelze einarbeiten und verursachen beim Spinnprozess Filterverstopfungen sowie Schwachstellen in den Fäden. Außerdem wird eine kontinuierliche und gleichmäßige Additivdosierung durch die Thermik der Schmelze beeinträchtigt, die die meist im freien Fall zugeführten Additivpartikel in der Zugabestelle in der Schwebe hält. Ein weiterer Nachteil ist, dass die Extruderöffnung für die Additivzugabe klein gehalten werden muss, um die Gefahr des Schmelzeaustritts an dieser Stelle zu reduzieren. Damit wird auch die Additivmenge limitiert.

Mit zunehmender Ausstoßleistung der kontinuierlichen Polykondensationsanlagen sind nur Produktionslinien mit einem hohen Flexibilitätsgrad wirtschaftlich. Oft muss auf einer einzigen Produktionslinie gleichzeitig die parallele Herstellung unterschiedlicher Produkttypen, wie z.B. Fasern und Granulat, möglich sein. Die Umstellung auf unterschiedliche Produktqualitäten, wie z.B. unmattiert, mattiert oder pigmentiert, muss hierbei innerhalb kürzester Zeit und möglichst verlustlos gewährleistet sein. Diese Forderungen werden mit den dem Stand der Technik zur Verfügung stehenden Verfahren nur unzureichend erfüllt.

Aufgabe der vorliegenden Erfindung war daher, ein Verfahren und eine Vorrichtung zur direkten, kontinuierlichen Modifizierung von Polymerschmelzen ohne die im Stand der Technik beschriebenen Nachteile zu entwickeln.

Diese Aufgabe wird durch das erfindungsgemäße Schmelzemodifizierungsverfahren im Seitenstrom mit den kennzeichnenden Merkmalen des Anspruchs 1 sowie der Vorrichtung zur Durchführung des erfindungsgemäßen Verfahrens mit den kennzeichnenden Merkmalen des Anspruchs 12 gelöst.

Gemäß der vorliegenden Erfindung wird somit ein Verfahren zur kontinuierlichen Herstellung von Polyamid 6 oder Copolyamiden, die aus mindestens 70 Gew.-% Wiederholungseinheiten, die sich von ε-Caprolactam ableiten, aufgebaut sind, mit folgenden Schritten bereitgestellt:
- a): Bereitstellung der Edukte,
- b): Bildung eines Präpolymers und Polykondensation des Präpolymers unter Erzeugung eines Hauptschmelzestroms,
- c): Granulierung der Polymerschmelze,
- d): Extraktion des Polyamidgranulats sowie
- e): Trocknung,
wobei dem Hauptschmelzestrom (b) eine Teilmenge entnommen und die Teilmenge in einem Seitenstrom in einem Extruder mit einer definierten Menge eines Additivs vermischt und der modifizierte Seitenstrom dem Hauptschmelzestrom (b) stromabwärts vor der Granulierung (c) rückgeführt und die bei der Extraktion (d) gebildete wässrige Extraktlösung, die Edukte, wie z.B. ε-Caprolactam enthält, eingeengt und in den Ausgangsprozess (a) rückgeführt wird.

Die besondere Eigenschaft des erfindungsgemäßen Verfahrens ist somit die Kombination der Aufgabe eines Additivs in einen Seitenstrom eines durch Polykondensation hergestellten Präpolymers, der einem Hauptschmelzestrom entnommen wird, mit einer gleichzeitig erfolgenden Extraktion des nach Vereinigung des Hauptschmelzestroms mit dem Teilschmelzestrom erzeugten Polyamidgranulates. Durch die Kombination der Zugabe des Additivs in einen Teilstrom sowie der anschließenden Extraktion des Granulats wird eine äußerst genaue Homogenisierung des zuzugebenden Additivs im Polymergranulat erhalten; gleichzeitig können ebenso nicht polykondensierte Edukte, wie beispielsweise Caprolactam bzw. kurzkettige Kondensate, die in den Produkten unerwünscht sind, wie z.B. Dimere und/oder Oligomere des Caprolactams, nahezu vollständig aus den Produkten entfernt werden. Das erfindungsgemäße Verfahren ermöglicht daher die Herstellung von sehr hochwertigen Polyamidgranulaten, bei denen die Additive äußerst homogen im Produkt vorliegen und die zeitgleich frei von Edukten, wie beispielsweise Caprolactam, sind, die die Eigenschaften nachhaltig verschlechtern würden. Ein weiterer Vorteil des erfindungsgemäßen Verfahrens ist der hohe Flexibilitätsgrad.

Additivumstellungen können unverzüglich und praktisch verlustlos ohne kostenaufwändige Reinigungsoperationen und ohne Produktminderqualitäten außerhalb der Spezifikation vorgenommen werden. Additivträgerpolymere sind nicht notwendig, so dass keine nachteilige Beeinflussung der Gebrauchseigenschaften des Endproduktes resultiert. Beim erfindungsgemäßen Verfahren handelt es sich um einen geschlossenen Prozess: Dadurch sind keinerlei aufwändige Eingriffe in den Produktionsprozess, wie z.B. die Herstellung von betriebsinternen Masterbatches, notwendig. Es findet kein Austreten von Polymerschmelze und/oder von flüchtigen Anteilen bei der Additivzugabe statt. Agglomeratfreies Modifizieren der Schmelze und damit verlängerte Filterstandzeiten sind möglich und wesentlich geringere Schneckendrehzahlen als im Stand der Technik sind notwendig. Es erfolgt keine Vertrocknung des Additivs und trotzdem gleichzeitig nur eine minimale und konstante Viskositätserniedrigung der Polymerschmelze. Zudem ergibt sich die Möglichkeit, die Extruderöffnung für die Additivzugabe so groß wie den gesamten Schneckenquerschnitt zu dimensionieren. Eine Limitierung der Additivzugabenmenge beziehungsweise des Schmelzedurchsatzes ist nicht nötig. Ein kontinuierliches und gleichmäßiges Eindosieren des Additivs in den ersten Extruderbereich ohne Thermikprobleme kann ohne zusätzliche Kühlungsmöglichkeit der ersten Extruderzone bei Verwendung von temperaturempfindlichen Additiven erfolgen. Eine Verwendung von dem Stand der Technik entsprechenden Verarbeitungshilfsmitteln ist nicht notwendig.

Eine bevorzugte Ausführungsform des erfindungsgemäßen Verfahrens sieht vor, dass der Hauptschmelzestrom (b) nach der Abzweigung des Seitenstroms stromabwärts in mindestens zwei Teilströme aufgeteilt und der modifizierte Seitenstrom in mindestens einen Teilstrom in einem definierten Verhältnis rückgeführt wird, wobei nachfolgend jeweils in den Teilströmen eine Granulierung (c), Extraktion (d) und Trocknung (e) erfolgt.

Eine weiter bevorzugte alternative Ausführungsform des erfindungsgemäßen Verfahrens sieht vor, dass der Hauptschmelzestrom (b) in drei Teilströme aufgeteilt und der modifizierte Seitenstrom in zwei Teilströme in definierten Verhältnissen rückgeführt wird.

Ebenso ist jedoch eine Aufsplittung des Hauptschmelzestromes in mehr als drei Teilströme möglich. Gemäß den zuvor beschriebenen bevorzugten Ausführungsformen des erfindungsgemäßen Verfahrens ist es möglich, die zwei bzw. drei oder mehr Teilströme beispielsweise mit unterschiedlichen Mengen des Additivs zu modifizieren. Dabei kann vorgesehen sein, dass in einem ersten Teilstrom gar kein Additiv aufgegeben wird, so dass in dieser Teilstrom-Linie nach erfolgter Granulierung, Extraktion und Trocknung additivfreies Polyamid erhalten wird.

Ebenso ist es bevorzugt, beide oder alle Teilströme mit unterschiedlichen Additivmengen zu versehen, so dass sich in einer Anlagen-Linie gleichzeitig drei unterschiedlich additivierte Polyamide herstellen lassen.

In jedem Teilstrom erfolgt abschließend eine vorzugsweise wässrige Extraktion des hergestellten Polymergranulats, wobei nicht abreagierte Edukte oder kurzkettige Kondensate aus dem Polyamidgranulat extrahiert werden. Besonders bevorzugt ist dabei, wenn die aus der wässrigen Extraktion erhaltenen Extraktwässer zusammengeführt, einkondensiert und die so rückgewonnen Edukte, wie beispielsweise ε-Caprolactam bzw. Dimere und/oder Oligomere hiervon der Polykondensationsstufe b) erneut zugeführt werden. Diese Ausführungsform ermöglicht es, auf ökonomisch und ökologisch effiziente Weise, Ressourcen-schonend einen möglichst hohen Anteil der Edukte zu entsprechend hochwertigen Produkten umzusetzen. Durch die Tatsache, dass die Extraktwässer aus den unterschiedlichen Teilströmen zusammengeführt und dort gemeinsam einkondensiert werden können, ergeben sich ökonomische Vorteile, da eine gleichzeitige Herstellung von mehreren Produktlinien von Polyamidgranulaten möglich ist, jedoch nur eine einzelne Extraktwasser-Kondensationsvorrichtung benötigt wird. Die so rückgewonnenen Edukte können der gemeinsamen Polykondensation erneut zugeführt werden.

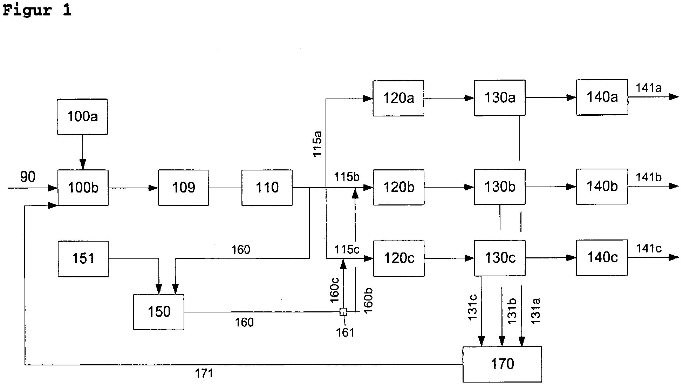

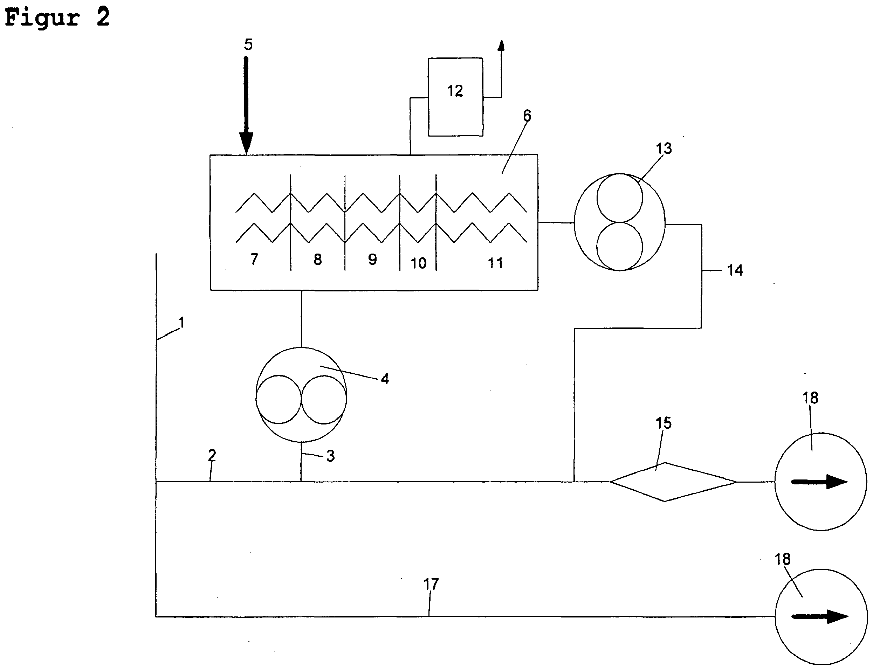

In einer weiter bevorzugten Ausführungsform ist vorgesehen, dass das Additiv in einen Doppelwellenextruder, mit unterschiedlichen Behandlungsbereichen, zudosiert wird. Ein derartiger Extruder ist beispielsweise in der DE 40 39 857 A1 beschrieben. Bezüglich der besonders bevorzugten Ausgestaltungen entsprechender Extruder mit unterschiedlichen Behandlungsbereichen wird dementsprechend auf diese Offenlegungsschrift, insbesondere auf Figuren 1 und 2 dieser Offenlegungsschrift sowie die dazugehörige Beschreibung verwiesen. Der Offenbarungsgehalt der DE 40 39 857 A1 wird hinsichtlich des bevorzugt eingesetzten Doppelwellenextruders durch Verweis auf die entsprechenden Offenbarungsstellen vollinhaltlich auch zum Gegenstand der vorliegenden Anmeldung gemacht.

Besonders bevorzugt ist, wenn als Additiv ein lösliches oder unlösliches, mineralisches oder organisches Pigment, bevorzugt Titandioxid, eingesetzt wird.

Ebenso ist es bevorzugt, wenn das Additiv unter Schutzgas, bevorzugt N₂, dem Extruder zudosiert wird.

In einer weiter bevorzugten Ausführungsform wird der Extruder unter Schutzgas, bevorzugt N₂, betrieben.

Bevorzugte Mengen des zuzugebenden Additivs in den zu modifizierenden Hauptschmelzestrom b) liegen dabei zwischen 0,01 und 16 Gew.-%, bevorzugt zwischen 0,03 und 0,6 Gew.-%. Die Additivmenge ist dabei bezogen auf das Gesamtgewicht des Hauptschmelzestroms.

Eine weiter bevorzugte Variante des erfindungsgemäßen Verfahrens sieht vor, dass die bei der Extraktion (d) gebildete wässrige Extraktlösung bis zu 15 Gew.-% ε-Caprolactam und Oligomere/Dimere enthält und nach der Einengung die Extraktkonzentration 70 bis 95 Gew.-% beträgt.

Ebenso ist es vorteilhaft, wenn bei oder nach der Einengung der Extraktlösung Frischlactam zugefügt wird.

In einer besonders bevorzugten Ausführungsform werden die bei den jeweiligen Teilströmen anfallenden wässrigen Extraktlösungen gemeinsam eingeengt.

Erfindungsgemäß wird ebenso eine Vorrichtung zur Durchführung des zuvor beschriebenen Verfahrens angegeben, die mindestens eine Dosiereinheit, mindestens eine Kondensationsvorrichtung, mindestens eine Granuliervorrichtung, mindestens eine Extraktionsvorrichtung und mindestens eine Trockeneinheit, die stromabwärts aufeinander folgend angeordnet sind, umfasst, wobei zwischen der mindestens einen Kondensationsvorrichtung und der mindestens einen Granuliervorrichtung ein Extruder in einem Bypass angeordnet ist, und die mindestens eine Extraktionsvorrichtung mit mindestens einer Eindampfanlage verbunden ist.

Eine bevorzugte Ausführungsform der erfindungsgemäßen Vorrichtung sieht vor, dass der Doppelwellenextruder einen Dosierbereich, einen Schmelzeeintrittsbereich, einen Benetzungsbereich, einen Entgasungsbereich und einen Dispergierbereich besitzt.

Insbesondere ist im Dosierbereich des Doppelwellenextruders der Schneckendurchmesser um 0,2 bis 4 mm reduziert.

Ein besonders bevorzugter Extruder, der für das erfindungsgemäße Verfahren eingesetzt werden kann, ist ein gleichläufiger Doppelwellenextruder.

Bezüglich dieser Ausführungsformen wird auf die DE 40 39 857 A1 verwiesen.

Weiter bevorzugt ist, wenn der Kondensationsvorrichtung eine Vorrichtung zur Bildung eines Präpolymers vorgeschaltet ist.

Mit der Dosiereinheit der erfindungsgemäßen Vorrichtung können die Edukte, die der Kondensationsvorrichtung zugeführt werden, genau dosiert werden. Gleichzeitig ist über die Dosiereinheit beispielsweise auch die Zugabe von Katalysatoren, etc. möglich.

Mit der mindestens einen Kondensationsvorrichtung lässt sich im Anschluss aus den eingesetzten Edukten ein Polyamid erzeugen. Die Kondensationsvorrichtung kann dabei auch zweigeteilt ausgeführt sein und beispielsweise aus einer Vorrichtung zur Bildung eines Präpolymeren sowie einer Polykondensationsvorrichtung bestehen.

Mit der Granuliervorrichtung lässt sich aus der Polyamidschmelze ein Granulat herstellen. Die Granuliervorrichtung oder Pelletiervorrichtung kann dabei in beliebiger Art und Weise ausgeführt sein. Möglich sind dabei beispielsweise Stranggranulationsvorrichtungen, Heißabschlagsgranulationsvorrichtungen oder Unterwasser-Granulationsvorrichtungen.

Ebenso können als Extraktionsvorrichtung bzw. als Trockeneinheit alle aus dem Stand der Technik bekannten Vorrichtungen verwendet werden.

Der zwischen der Kondensationsvorrichtung und der Granuliervorrichtung in einem Bypass angeordnete Extruder dient dabei der Zugabe des Additivs. Das Additiv kann dabei beispielsweise in einem Vorratslager bevorratet und gezielt über den Extruder, der im Bypass angeordnet ist, aufgegeben werden.

Eine bevorzugte Ausführungsform sieht vor, dass der aus der Kondensationsvorrichtung ausgeleitete Hauptschmelzestrom anschließend in zwei oder mehr Teilströme aufgeteilt wird. Vor der Aufzweigung des Hauptschmelzestroms in die besagten Teilströme wird jedoch dem aus der Kondensationsvorrichtung austretenden Hauptschmelzestrom der Bypass, der den Seitenstrom in den Extruder abzweigt, abgeführt. Der Bypass endet dabei bevorzugt in mindestens einem der so erzeugten Teilströme, bevorzugt in mehreren der Teilströme. Somit lassen sich mit der Vorrichtung unterschiedlich additivierte Polyamidschmelz-Linien erzeugen.

Weiter bevorzugt umfasst die erfindungsgemäße Vorrichtung eine Eindampfanlage zur Rückgewinnung des Extraktes. Für den Fall, dass wie voranstehend beschrieben mehrere Teilströme aus unterschiedlich additivierten Polyamidschmelzen hergestellt werden, verfügt jeder der Teilströme über eine separate Granuliervorrichtung, Extraktionsvorrichtung und Trockenvorrichtung. Für diesen Fall ist es bevorzugt, dass die aus den jeweiligen Extraktionsvorrichtungen erhaltenen Extrakte, insbesondere die monomerhaltigen Extraktwässer, einer den jeweiligen Extraktionsvorrichtungen nachgeschalteten Eindampfanlage zur Eindampfung der erhaltenen Extraktwässer zugeführt werden. In einer derartigen Eindampfanlage wird Wasser zumindest teilweise entfernt. Die aufkonzentrierten erhaltenen Edukte bzw. Oligomere dieser Edukte, insbesondere ε-Caprolactam bzw. Dimere und/oder Oligomere hiervon, können erneut in die Dosiervorrichtung aufgegeben und somit erneut der Polykondensation zugeführt werden.

Die vorliegende Erfindung wird anhand der nachfolgenden Figuren näher ausgeführt, ohne die Erfindung auf die dort dargestellten speziellen Ausführungsformen zu beschränken.

Dabei zeigt
- Figur 1: eine Vorrichtung zur Durchführung des erfindungsgemäßen Verfahrens, die drei Teilströme umfasst;
- Figur 2: einen Ausschnitt aus der in Figur 1 dargestellten Polykondensationsvorrichtung; sowie
- Figur 3: eine beispielhafte Schnecke, die in einem Extruder in der erfindungsgemäßen Vorrichtung eingesetzt werden kann.

Figur 1 zeigt eine Vorrichtung zur Herstellung von verschiedenen Polyestergranulat-Linien gemäß der vorliegenden Erfindung. Ein ε-Caprolactam-Strom 90 wird dabei einer Dosierungsvorrichtung 100b zugeführt. Die Dosierungsvorrichtung kann dem eingesetzten Edukt, d.h. dem ε-Caprolactam-Strom 90, beispielsweise Additive, insbesondere Katalysatoren, etc., die beispielsweise in einer Vorrichtung 100a bevorratet sein können, zuführen. Gleichzeitig kann die Menge an ε-Caprolactam gezielt dosiert werden. Das erzeugte Eduktgemisch wird im weiteren einer Kondensationsvorrichtung zugeführt, die im Beispiel gemäß Figur 1 zweiteilig in Form eines Präpolymerisations- bzw. Präkondensationsreaktors 109 sowie eines Post-Kondensationsreaktors 110 ausgeführt ist. Ein Teil des aus der Polykondensationsvorrichtung austretenden Hauptschmelzestroms wird dabei in einem Bypass 160 einem geeigneten Extruder 150 zugeführt. Mittels dieses Extruders lassen sich Additive, die beispielsweise in einer Vorrichtung 151 bevorratet sein können, dem Seitenstrom im Bypass 160 zuführen. Nach Abzweigen dieses Seitenstroms wird der Hauptstrom in drei Linien 115a, 115b und 115c aufgeteilt und jeweils Granuliervorrichtungen 120a, 120b und 120c zugeführt. In diese verschiedenen Linien 115a, 115b bzw. 115c wird jeweils ein Teil des in den Bypass 160 abgezweigten und mittels des Extruders 150 modifizierten Seitenstroms zugeführt. Dabei wird der Seitenstrom 160 mittels einer Weiche 161 in mehrere Teilströme 160b und 160c aufgeteilt, die jeweils in die Seitenlinien 115b bzw. 115c münden. Gemäß des Beispiels in Figur 1 wird mit der Vorrichtung lediglich eine Modifizierung der Seitenströme 115b und 115c vorgenommen, während die Seitenlinie 115a unmodifiziert, d.h. nicht additiviert, bleibt. Es ist jedoch ebenso möglich, auch eine Teilmenge des im Bypass 160 geführten Seitenstromes in die Seitenlinie 115a aufzugeben. Mittels der Weiche 161 können beispielsweise unterschiedliche Additivierungsgrade der Seitenlinien 115b und 115c eingestellt werden. Nach erfolgter Granulierung erfolgt jeweils eine Extraktion des erzeugten Granulats mittels jeweils einer Extraktionsvorrichtung 130a, 130b und 130c, die jeweils in den Seitenlinien 115a, 115b und 115c angeordnet und der jeweiligen Pelletiervorrichtung 120a, 120b und 120c nachgeschaltet sind. Das bei der durchgeführten wässrigen Extraktion erhaltene Extraktwasser, das beispielsweise Caprolactam als Edukt bzw. Dimere hiervon und/oder wasserlösliche kurzkettige Oligomere enthält, wird über Extraktwasserleitungen 131a, 131b und 131c einer Eindampfanlage 170 zugeführt und dort gesammelt. Es findet eine gemeinsame Eindampfung der aus den einzelnen Seitenlinien 115a, 115b und 115c erhaltenen Extraktwässer statt. Je nach Verfahrensführung kann der Eindampfgrad dieser Extraktwässer gezielt eingestellt werden. Die erhaltenen aufkonzentrierten Extrakte, die somit reich an Caprolactam bzw. kurzkettigen und noch reaktionsfreudigen Oligomeren sind, können über eine Sammelleitung 171 der Dosierungsvorrichtung 100b zugeführt werden und dem Frischlactamstrom 90 zugespeist werden. Das extrahierte Granulat wird in den jeweiligen Seitenlinien 115a, 115b und 115c anschließend einer Trocknung mittels entsprechender Trocknungsvorrichtungen 140a, 140b und 140c unterzogen. Jeweils unterschiedlich additiviertes Granulat 141a, 141b und 141c wird im Anschluss an das Trocknungsverfahren erhalten. Im Beispiel des in Figur 1 dargestellten Schemas ist das Polyamid-Granulat 141a additivfrei, das Polyamid-Granulat 141b semiadditiviert (weist also einen kleineren Additivierungsgrad an Additiv, verglichen mit dem Polyamid-Granulat 141c auf) und das Polyamid-Granulat 141c "voll" additiviert.

Figur 2 stellt eine detailliertere Wiedergabe eines Details der erfindungsgemäßen Vorrichtung bzw. des erfindungsgemäßen Verfahrens dar. Dargestellt ist eine Verfahrensführung bis zur Pelletierung, d.h. die in Figur 1 erwähnten Extraktions- und Trocknungsschritte sind in Figur 2 nicht dargestellt. Figur 2 dient der Verdeutlichung des Prinzips der Additivzugabe im Seitenstrom durch einen speziellen Extruder.

In Figur 2 bezeichnet 1 den Hauptschmelzestrom, 2 den wahlweise zu modifizierenden Teilschmelzestrom, 3 den zu modifizierenden Seitenschmelzestrom, 4 die Förderpumpe, 5 die Additivzugabevorrichtung, 6 den Doppelwellenextruder, 7 den Dosierbereich, 8 den Schmelzeeintrittsbereich, 9 den Benetzungsbereich, 10 den Entgasungsbereich und 11 den Dispergierbereich, 12 die Entgasungsvorrichtung, 13 die Rückförderpumpe, 14 den modifizierten Seitenstrom, 15 das statische Mischelement, 16 die Spinnstelle, 17 den unmodifizierten Teilschmelzestrom und 18 den Granulator.

Der Polymerhauptschmelzestrom wird in verschiedene Teilschmelzeströme, je nach Anzahl der gewünschten unterschiedlichen Produkttypen, aufgeteilt: Im Beispiel von Figur 2 zur Herstellung von wahlweise mattierter oder unmattierter Schmelze für die Direktverspinnung 16 und zur Erzeugung von unmodifiziertem Rohgranulat 17. Vom wahlweise zu modifizierenden Teilschmelzestrom 2 wird wiederum ein Seitenschmelzestrom 3 abgezweigt und mit einer dosierenden Förderpumpe 4 in einen mit speziell ausgelegten Schneckenelementen versehenen Doppelwellenextruder 6 mit mehreren Behandlungsbereichen 7 bis 11 zugeführt. Im ersten Extruderbereich (Dosierbereich 7) wird das mit einer Zugabevorichtung 5 als Feststoff zudosierte Additiv eingezogen und in dem zweiten Bereich Schmelzeeintrittsbereich 8 gefördert, in dem der Teilschmelzestrom auf das Additiv geführt und in einem dritten Extruderbereich (Benetzungsbereich 9) die Benetzung erfolgt, anschließend in einem vierten Extruderbereich (Entgasungsbereich 10) mit Entgasungsvorrichtung 12 gefördert und entgast wird und in einem fünften Extruderbereich (Dispergierbereich 11) dann die Dispergierung gemäß dem dem Fachmann bekannten Stand der Technik erfolgt. Das so erhaltene Additiv-Schmelzekonzentrat wird über eine Rückförderpumpe 13 dem zu modifizierenden Teiischmelzestrom 2 wieder zudosiert und in einem statischen Mischelement 15 homogen rückvermischt.

Mit dem erfindungsgemäßen Verfahren sowie dessen Vorrichtung lassen sich Polymerschmelzen mit 0,015 bis 16 Gew.-%, bevorzugt 0,03 bis 0,6 Gew.-%, besonders bevorzugt 0,3 Gew.-%, Additiv problemlos modifizieren.

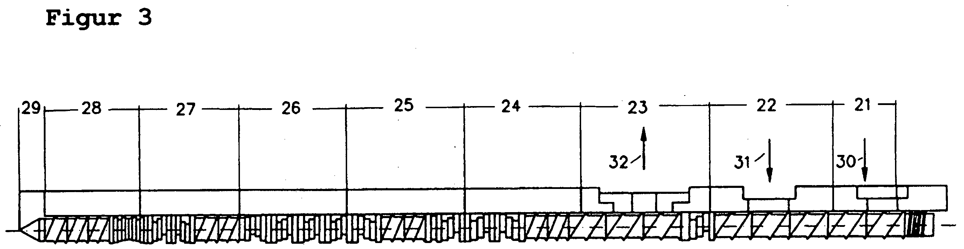

Figur 3 zeigt als beispielhafte Ausführungsform einen gleichlaufenden Doppelwellenextruder der Firma Berstorf Typ ZE 40A mit heiz- und kühlbaren Zonen: 21 Dosierzone, 22 Schmelzeeintrittszone, 23 Entgasungszone, 24-28 Dispergierzonen, 29 Schneckenkopf, 30 Additivdosierung, 31 Polymerschmelzezuführung und 32 Entgasung.

Eine Vorrichtung zum Durchführen des erfindungsgemäßen Verfahrens besteht mindestens aus einer Förderpumpe 3, einem speziell ausgelegten Doppelwellenextruder 6 mit Additivzugabe- 5 und Entgasungsvorrichtung 12 und den Behandlungsbereichen 7 bis 11, einer Rückförderpumpe 13 und einem statischen Mischelement 15, wobei die Additivzugabevorrichtung 5 vorzugsweise ein Fallrohr ist, der speziell ausgelegte Doppelwellenextruder 6 ein bevorzugt gleichläufiger Doppelwellenextruder ist, der im ersten Extruderbereich (Dosierzone 7) speziell ausgelegte Schneckenelemente besitzt, deren Durchmesser um 0,2 bis 4 mm, bevorzugt 0,5 bis 2 mm, besonders bevorzugt 0,5 bis 1 mm, reduziert sind, im zweiten Extruderbereich (Schmelzeeintrittszone 8) in bekannter Weise Förderelemente hat, im dritten Extruderbereich (Benetzungszone 9) Knet- und Stauelemente besitzt, im vierten Extruderbereich (Entgasungsbereich 10) in bekannter Weise mit Förderelementen bestückt, im fünften Extruderbereich (Dispergierbereich 11) in bekannter Weise alternierend mit Förder- und Knetelementen ausgerüstet ist und der Dosierbereich 7 bei Verwendung von temperaturempfindlichen Additiven gekühlt werden kann.

## Patentansprüche

1. Verfahren zur kontinuierlichen Herstellung von Polyamid 6 oder Copolyamiden, die aus mindestens 70 Gew.-% Wiederholungseinheiten, die sich von ε-Caprolactam ableiten, aufgebaut sind, mit folgenden Schritten:
a) Bereitstellung der Edukte,
b) Bildung eines Präpolymers und Polykondensation des Präpolymers unter Erzeugung eines Hauptschmelzestroms,
c) Granulierung der Polymerschmelze,
d) Extraktion des Polyamidgranulats sowie
e) Trocknung,
**dadurch gekennzeichnet,**
**dass** dem Hauptschmelzestrom (b) eine Teilmenge entnommen und die Teilmenge in einem Seitenstrom in einem Extruder mit einer definierten Menge eines Additivs vermischt und der modifizierte Seitenstrom dem Hauptschmelzestrom (b) stromabwärts vor der Granulierung (c) rückgeführt und dass die bei der Extraktion (d) gebildete wässrige Extraktlösung, enthaltend ε-Caprolactam, eingeengt und in den Ausgangsprozess (a) rückgeführt wird.

2. Verfahren nach Anspruch 1, **dadurch gekennzeichnet, dass** der Hauptschmelzestrom (b) nach der Abzweigung des Seitenstroms stromabwärts in mindestens zwei Teilströme aufgeteilt und der modifizierte Seitenstrom in mindestens einen Teilstrom in einem definierten Verhältnis rückgeführt wird und dass nachfolgend jeweils in den Teilströmen eine Granulierung (c), Extraktion (d) und Trocknung (e) erfolgt.

3. Verfahren nach Anspruch 2, **dadurch gekennzeichnet, dass** der Hauptschmelzestrom (b) in drei Teilströme aufgeteilt und der modifizierte Seitenstrom in zwei Teilströme in definierten Verhältnissen rückgeführt wird.

4. Verfahren nach mindestens einem der Ansprüche 1 bis 3, **dadurch gekennzeichnet, dass** das Additiv in einen Doppelwellenextruder, mit unterschiedlichen Behandlungsbereichen, zudosiert wird.

5. Verfahren nach mindestens einem der Ansprüche 1 bis 4, **dadurch gekennzeichnet, dass** als Additiv ein lösliches oder unlösliches, mineralisches oder organisches Pigment, bevorzugt Titandioxid, eingesetzt wird.

6. Verfahren nach mindestens einem der Ansprüche 1 bis 5, **dadurch gekennzeichnet, dass** das Additiv unter Schutzgas, bevorzugt N₂, dem Extruder zudosiert wird.

7. Verfahren nach mindestens einem der Ansprüche 1 bis 6, **dadurch gekennzeichnet, dass** der Extruder unter Schutzgas, bevorzugt N₂, betrieben wird.

8. Verfahren nach mindestens einem der Ansprüche 1 bis 7, **dadurch gekennzeichnet, dass** der zu modifizierende Hauptschmelzestrom (b) mit 0,01 bis 16 Gew.-%, bevorzugt 0,03 bis 0,6 Gew.-%, Additiv modifiziert wird.

9. Verfahren nach mindestens einem der Ansprüche 1 bis 8, **dadurch gekennzeichnet, dass** die bei der Extraktion (d) gebildete wässrige Extraktlösung bis zu 15 Gew.-% ε-Caprolactam und Oligomere/- Dimere enthält und nach der Einengung die Extraktkonzentration 70 bis 95 Gew.-% beträgt.

10. Verfahren nach mindestens einem der Ansprüche 1 bis 9, **dadurch gekennzeichnet, dass** bei der Einengung der Extraktlösung Frischlactam zugefügt wird.

11. Verfahren nach mindestens einem der Ansprüche 2 bis 10, **dadurch gekennzeichnet, dass** die bei den jeweiligen Teilströmen anfallenden wässrigen Extraktlösungen gemeinsam eingeengt werden.

12. Vorrichtung zur Durchführung des Verfahrens nach mindestens einem der Ansprüche 1 bis 11 umfassend mindestens eine Dosiereinheit (100a, 100b), mindestens eine Kondensationsvorrichtung (100), mindestens eine Granuliervorrichtung (120a, 120b, 120c), mindestens eine Extraktionsvorrichtung (130a, 130b, 130c) und mindestens eine Trockeneinheit (140a, 140b, 140c), die stromabwärts aufeinander folgend angeordnet sind, wobei zwischen der mindestens einen Kondensationsvorrichtung (110) und der mindestens einen Granuliervorrichtung (120a, 120b, 120c) ein Extruder (150) in einem Bypass (160) angeordnet ist, und dass die mindestens eine Extraktionsvorrichtung (130a, 130b, 130c) mit mindestens einer Eindampfanlage (170) verbunden ist.

13. Vorrichtung nach Anspruch 12, **dadurch gekennzeichnet, dass** der Doppelwellenextruder einen Dosierbereich, einen Schmelzeeintrittsbereich, einen Benetzungsbereich, einen Entgasungsbereich und einen Dispergierbereich besitzt.

14. Vorrichtung nach Anspruch 13, **dadurch gekennzeichnet, dass** im Dosierbereich des Doppelwellenextruders der Schneckendurchmesser um 0,2 bis 4 mm reduziert ist.

15. Vorrichtung nach Anspruch 13 oder 14, **dadurch gekennzeichnet, dass** der Doppelwellenextruder ein gleichläufiger Doppelwellenextruder ist.

16. Vorrichtung nach mindestens einem der Ansprüche 12 bis 15, **dadurch gekennzeichnet, dass** der Kondensationsvorrichtung (110) eine Vorrichtung (109) zur Bildung eines Präpolymers vorgeschaltet ist.

## Claims

1. Method for continuous production of polyamide 6 or copolyamides which are formed from at least 70% by weight of repeat units derived from *ε*-caprolactam, having the following steps:
a) provision of the educts,
b) formation of a prepolymer and polycondensation of the prepolymer with production of a main melt stream,
c) granulation of the polymer melt,
d) extraction of the polyamide granulate and also
e) drying,
***characterised in that***
a partial quantity is removed from the main melt stream (b) and the partial quantity is mixed in a side stream in an extruder with a defined quantity of an additive and the modified side stream is returned to the main melt stream (b) downstream before the granulation (c) and **in that** the aqueous extract solution formed during the extraction (d), which comprises ε-caprolactam, is concentrated and returned to the initial process (a).

2. Method according to claim 1, **characterised in that** the main melt stream (b), after branching-off of the side stream, is divided downstream into at least two partial streams and the modified side stream is returned into at least one partial stream in a defined ratio, and **in that** subsequently there is effected respectively in the partial streams, granulation (c), extraction (d) and drying (e).

3. Method according to claim 2, **characterised in that** the main melt stream (b) is divided into three partial streams and the modified side stream is returned into two partial streams in defined ratios.

4. Method according to at least one of the claims 1 to 3, **characterised in that** the additive is metered into a twin-shaft extruder with different treatment regions.

5. Method according to at least one of the claims 1 to 4, **characterised in that** a soluble or insoluble, mineral or organic pigment, preferably titanium dioxide, is used as additive.

6. Method according to at least one of the claims 1 to 5, **characterised in that** the additive is metered into the extruder under protective gas, preferably N₂.

7. Method according to at least one of the claims 1 to 6, **characterised in that** the extruder is operated under protective gas, preferably N₂.

8. Method according to at least one of the claims 1 to 7, **characterised in that** the main melt stream b) to be modified is modified with 0.01 to 16% by weight, preferably 0.03 to 0.6% by weight, of additive.

9. Method according to at least one of the claims 1 to 8, **characterised in that** the aqueous extract solution formed during the extraction (d) comprises up to 15% by weight of ε-caprolactam and oligomers/dimers and, after concentration, the extract concentration is 70 to 95% by weight.

10. Method according to at least one of the claims 1 to 9, **characterised in that** virgin lactam is added during concentration of the extract solution.

11. Method according to at least one of the claims 2 to 10, **characterised in that** the aqueous extract solutions present in the respective partial streams are concentrated together.

12. Device for implementing the method according to at least one of the claims 1 to 11, comprising at least one metering unit (100a, 100b), at least one condensation device (100), at least one granulation device (120a, 120b, 120c), at least one extraction device (130a, 130b, 130c) and at least one drying unit (140a, 140b, 140c) which are disposed downstream in succession, an extruder (150) being disposed in a bypass (160) between the at least one condensation device (110) and the at least one granulation device (120a, 120b, 120c), and in that the at least one extraction device (130a, 130b, 130c) is connected to at least one evaporation unit (170).

13. Device according to claim 12, **characterised in that** the twin-shaft extruder has a metering region, a melt inlet region, a wetting region, a degassing region and a dispersion region.

14. Device according to claim 13, **characterised in that** the screw diameter is reduced by 0.2 to 4 mm in the metering region of the twin-shaft extruder.

15. Device according to claim 13 or 14, **characterised in that** the twin-shaft extruder is a co-rotating twin-shaft extruder.

16. Device according to at least one of the claims 12 to 15, **characterised in that** a device (109) for forming a prepolymer is connected to the condensation device (110) on the upstream side.

## Revendications

1. Procédé de fabrication continue de polyamide 6 ou de copolyamides constitués d'au moins 70 % en poids de motifs répétitifs qui dérivent de l'ε-caprolactame, comportant les étapes suivantes :
a) fourniture des matières de départ,
b) formation d'un prépolymère et polycondensation du prépolymère avec production d'un courant principal de matière fondue,
c) granulation de la matière fondue polymère,
d) extraction du granulé de polyamide, ainsi que
e) séchage,
**caractérisé en ce qu'**on prélève du courant principal de matière fondue (b) une quantité partielle, et qu'on mélange la quantité partielle, dans un courant latéral dans une extrudeuse, à une quantité définie d'un additif, et on renvoie le courant latéral modifié au courant principal de matière fondue (b) en aval de la granulation (c), et que l'on concentre la solution aqueuse d'extrait, contenant de l'ε-caprolactame, formée lors de l'extraction (d), et on la renvoie à l'opération de départ (a).

2. Procédé selon la revendication 1, **caractérisé en ce que** le courant principal de masse fondue (b) est, après la dérivation du courant latéral, subdivisé en aval en au moins deux courants partiels, et le courant latéral modifié est renvoyé dans au moins un courant partiel selon une proportion définie, et que l'on procède ensuite, dans chacun des courants partiels, à une granulation (c), une extraction (d) et un séchage (e).

3. Procédé selon la revendication 2, **caractérisé en ce que** le courant principal de matière fondue (b) est subdivisé en trois courants partiels, et le courant latéral modifié est renvoyé dans deux courants partiels selon des proportions définies.

4. Procédé selon au moins l'une des revendications 1 à 3, **caractérisé en ce que** l'additif est dosé dans une extrudeuse à double arbre comportant différentes zones de traitement.

5. Procédé selon au moins l'une des revendications 1 à 4, **caractérisé en ce qu'**on utilise en tant qu'additif un pigment minéral ou organique, soluble ou insoluble, de préférence le dioxyde de titane.

6. Procédé selon au moins l'une des revendications 1 à 5, **caractérisé en ce que** l'additif est dosé dans l'extrudeuse sous un gaz protecteur, de préférence N₂.

7. Procédé selon au moins l'une des revendications 1 à 6, **caractérisé en ce que** l'extrudeuse est exploitée sous un gaz protecteur, de préférence N₂.

8. Procédé selon au moins l'une des revendications 1 à 7, **caractérisé en ce que** le courant principal de matière fondue (b) à modifier est modifié avec 0,01 à 16 % en poids, de préférence 0,03 à 0,6 % en poids d'additif.

9. Procédé selon au moins l'une des revendications 1 à 8, **caractérisé en ce que** la solution aqueuse d'extrait, formée lors de l'extraction (d), contient jusqu'à 15 % en poids d'ε-caprolactame et d'oligomères/dimères et, après la concentration, présente une concentration de l'extrait de 70 à 95 % en poids.

10. Procédé selon au moins l'une des revendications 1 à 9, **caractérisé en ce que**, lors de la concentration, on ajoute du lactame frais à la solution d'extrait.

11. Procédé selon au moins l'une des revendications 2 à 10, **caractérisé en ce que** les solutions aqueuses d'extrait obtenues pour chacun des courants partiels sont concentrées en commun.

12. Dispositif pour la mise en oeuvre du procédé selon au moins l'une des revendications 1 à 11, comprenant au moins une unité de dosage (100a, 100b), au moins un dispositif de condensation (100), au moins un dispositif de granulation (120a, 120b, 120c), au moins un dispositif d'extraction (130a, 130b, 130c) et au moins une unité de séchage (140a, 140b, 140c), qui sont disposés successivement en aval les uns des autres, une extrudeuse (150) étant disposée dans un bipasse (160) entre le ou les dispositifs de condensation (110) et le ou les dispositifs de granulation (120a, 120b, 120c), et que le ou les dispositifs d'extraction (130a, 130b, 130c) sont reliés à au moins une installation d'évaporation (170).

13. Dispositif selon la revendication 12, **caractérisé en ce que** l'extrudeuse à double arbre possède une zone de dosage, une zone d'entrée de la matière fondue, une zone de mouillage, une zone de dégazage et une zone de dispersion.

14. Dispositif selon la revendication 13, **caractérisé en ce que**, dans la zone de dosage de l'extrudeuse à double arbre, le diamètre de la vis sans fin est réduit de 0,2 à 4 mm.

15. Dispositif selon la revendication 13 ou 14, **caractérisé en ce que** l'extrudeuse à double arbre est une extrudeuse à double arbre tournant dans le même sens.

16. Dispositif selon au moins l'une des revendications 12 à 15, caractérisé eri ce qu'un dispositif (109), pour la formation d'un prépolymère, est monté en amont du dispositif de condensation (110).
